# FASCICULE DE BREVET EUROPEEN

(11) **EP 2 010 682 B1**
(45) Date de publication et mention de la délivrance du brevet: **04.08.2010**
(21) Numéro de dépôt: 07719198.9
(22) Date de dépôt: 23.04.2007
(51) Int. Cl.: C21C 5/52, F27D 3/16, F27D 19/00, F27D 21/00

(54) **DISPOSITIF ET PROCEDE DE CONTROLE DYNAMIQUE DES BRULEURS COMBINES ET DES LANCES D'INSUFFLATION D'OXYGENE DANS UN FOUR**
VORRICHTUNG UND VERFAHREN ZUR DYNAMISCHEN STEUERUNG VON KOMBINIERTEN BRENNERN UND LANZEN ZUM EINBLASEN VON SAUERSTOFF IN EINEN OFEN
DEVICE AND METHOD FOR THE DYNAMIC CONTROL OF COMBINED BURNERS AND OF LANCES FOR BLOWING OXYGEN INTO AN OVEN

(30) Priorité: 26.04.2006 BE 200600246
(43) Date de publication de la demande: 07.01.2009
(73) Titulaire: Centre de Recherches Métallurgiques asbl - Centrum voor Research in de Metallurgie vzw, 1200 Bruxelles (BE)
(72) Inventeur: NYSSEN, Pierre, 4031 ANGLEUR (BE); MATHY, Cécile, 4347 Voroux-Goreux (BE)
(74) Mandataire: pronovem
(86) Numéro de dépôt international: PCT/BE2007/000034
(87) Numéro de publication internationale: WO 2007/121539

(56) Documents cités:
- EP-A- 1 703 241
- DE-A1- 2 045 602
- DE-A1- 2 745 251
- GB-A- 1 590 655
- JP-A- 2 254 345
- US-A- 5 557 631
- US-B1- 6 596 995

## Description

### Objet de l'invention

La présente invention se rapporte à un dispositif de contrôle dynamique des brûleurs combinés et des lances d'insufflation d'oxygène dans un four métallurgique, tel qu'un four électrique à arc ou un four de réduction en vue d'améliorer ou d'optimiser son rendement énergétique. Un brûleur combinée est un brûleur de préchauffage associé à une lance d'insufflation d'oxygène.

L'invention se rapporte également au procédé de mise en oeuvre du dispositif.

### Arrière-plan technologique et état de la technique

Il est connu qu'un four électrique à arc, comme ceux utilisés par exemple en métallurgie, appelé succinctement par la suite "four à arc", comporte souvent plusieurs brûleurs, généralement disposées sur la paroi latérale du four. De plus, la charge d'un tel four à arc est constituée principalement par des déchets métalliques pouvant contenir des pièces déclassées ou des débris de fonte, d'acier ou de métaux ferreux ou non-ferreux, qui seront dans la suite de la description appelés indistinctement "mitraille(s)" ou "ferraille(s)".

Dans les fours à arc, on utilise soit des brûleurs à oxy-fuel seuls, soit des brûleurs combinés, comprenant l'association d'un brûleur à oxy-fuel en vue du préchauffage et d'une lance d'insufflation d'oxygène, soit encore des lances à insufflation d'oxygène seules ou ces différents dispositifs en combinaison. De manière plus générale, ces dispositifs peuvent également équiper des récipients de fusion métallurgique, de type à « smelting réduction ». Tous ces récipients métallurgiques peuvent être également munis de lances à insufflation de matière (par exemple charbon, chaux, minerai, poussières, etc.).

Dans le processus de fusion à l'arc électrique, il est connu de souffler de l'oxygène à travers la surface de la couche de laitier surnageant, directement dans le métal liquide. Il en résulte une décarburation du métal liquide, c'est-à-dire une oxydation du carbone d'abord en monoxyde puis en dioxyde de carbone, ainsi que la formation d'une couche de laitier moussant qui couvre l'arc et réduit le rayonnement vers les panneaux et la voûte et, par conséquent, réduit la consommation d'énergie.

Cependant, l'utilisation d'une lance à oxygène présente l'inconvénient que le jet de gaz peut être accidentellement renvoyé par les mitrailles en direction des parois du four, avec comme conséquence un endommagement éventuel de celles-ci.

La bonne pratique actuelle consiste en deux modalités différentes de travail :
- dans le cas de la présence d'un brûleur combiné comme défini ci-dessus, on préchauffe avec le brûleur durant un certain temps pour créer une cavité suffisante dans la mitraille et ensuite seulement on met en route la lance à oxygène, en jet supersonique, simultanément ou non avec le fonctionnement du brûleur ;
- dans le cas de la présence d'une lance à oxygène seule, on utilise celle-ci dans un premier temps à régime (débit) réduit pour créer une cavité suffisante dans la mitraille ; une fois celle-ci créée, on utilise alors la lance, de préférence à plein régime, comme dans la phase correspondante décrite ci-dessus, dans le cas de l'utilisation d'un brûleur combiné.

Même en opérant suivant les modalités précédentes, il n'est pas certain que l'on crée par fusion une cavité libre ou que celle-ci est formée de manière stable.

Dans le brevet belge n° BE-A-1016551 (EP 1703241), la Demanderesse a proposé un dispositif pour le contrôle dynamique de la combustion d'un brûleur à combustible gazeux ou liquide dans un four électrique à arc, en particulier dans un four à arc d'aciérie, le brûleur émettant en utilisation une flamme par une ouverture située à une de ses extrémités au-dessus d'un bain de métal fondu lui-même surmonté d'une charge de mitraille. Ce dispositif comprend des moyens de mesure sans contact, situés à l'extérieur du four à arc, pour estimer la distance entre l'extrémité du brûleur et une cible constituée par de la mitraille solide située en face de ladite extrémité. Ces moyens de mesure comprennent une source émettant un signal passant à l'intérieur du brûleur en direction de ladite cible, et un détecteur où est capté ledit signal réfléchi par la cible, également en passant à l'intérieur du brûleur, et de préférence, une tête de détection de type capteur de distance optique, situé à l'intérieur ou à l'arrière du brûleur, présentant par exemple un laser pulsé émettant un faisceau incident visant la mitraille à travers une ouverture située dans l'axe du brûleur et un photodétecteur apte à recevoir le faisceau laser réfléchi par la mitraille.

Ce dispositif pourrait avantageusement être mis en oeuvre soit dans le cas d'un brûleur séparé, soit dans le cas d'un brûleur combiné tel que défini ci-dessus, ou encore dans le cas d'une lance à insufflation d'oxygène seule.

Selon l'état de l'art actuel, on s'efforce de prendre des précautions pour éviter d'endommager les parois des fours, ce qui conduit notamment à une augmentation du temps de traitement, à la limitation du débit d'oxygène en début de traitement, etc. Ces précautions nécessaires entraînent des pertes de productivité.

Pour améliorer le rendement des lances à oxygène, un contrôle dynamique de celles-ci est requis. On entend par contrôle dynamique un contrôle ou une régulation en temps réel qui tient compte des conditions opérationnelles à un instant donné, par opposition à un point de fonctionnement préprogrammé.

Le dispositif de contrôle dynamique développé pour les brûleurs à oxy-fuel pourrait donc trouver une application très intéressante également dans le cas de l'utilisation de lances à oxygène et de brûleurs combinés en récipient de fusion métallurgique. La difficulté d'utiliser ce dispositif dans ce cas précis réside dans le faible diamètre des tuyères à oxygène (typiquement 18-30 mm). En effet, le dispositif décrit ci-dessus fonctionne avec des largeurs de faisceaux importantes et des chemins optiques distincts et convergents, incompatibles avec les valeurs précitées de diamètre des tuyères.

La demande de brevet DE 27 45 251 A1 divulgue un dispositif pour le contrôle dynamique de la distance entre l'extrémité d'une lance à oxygène et un bain de métal fondu dans un four, plus particulièrement dans un convertisseur. Une mesure de distance, selon la méthode de temps de vol, est effectuée sans contact via un dispositif placé à l'extérieur du four sur une autre extrémité de la lance. Ce dispositif est équipé d'une source émettrice tel qu'un laser pulsé et d'un détecteur où est capté le faisceau réfléchi par le bain. La demande susmentionnée ne traite pas du problème de la séparation des faisceaux incident et réfléchi dans une tuyère.

De même, la demande de brevet DE 20 45 602 A1 décrit un système radar pour le contrôle automatique de la distance entre l'extrémité d'une lance à oxygène et la surface d'un bain en fusion. Un générateur placé à l'extérieur du four transmet un signal électromagnétique pulsé à travers la lance vers la surface du bain et le signal réfléchi traverse ensuite la lance en retour jusqu'à un récepteur. Le temps écoulé entre la transmission et la réflexion permet de calculer la distance entre la lance et le bain.

Dans le brevet américain US-B-6 440 355, on décrit un dispositif de mesure optique, rétractable dans un logement de protection et solidaire du système de manutention d'une lance à oxygène dans un convertisseur à l'oxygène. Ce dispositif de mesure comprend une tête optique à laser apte à envoyer un faisceau incident sur une zone cible dans le four, tel que la surface du laitier, à recevoir et détecter le faisceau réfléchi et à déterminer, par comparaison des deux faisceaux, la distance à laquelle se trouve la zone cible. Ce dispositif a pour seul objet de permettre un ajustement correct de la distance séparant le laitier de la tête de la lance à oxygène.

### Buts de l'invention

La présente invention vise à proposer une solution qui permette de s'affranchir des inconvénients de l'état de la technique.

En particulier, la présente invention vise à fournir un procédé de contrôle dynamique, c'est-à-dire en cours de fonctionnement, des lances à insufflation d'oxygène ou à injection de matières sous pression, montées sur les parois de fours métallurgiques ou à « smelting réduction ».

Un but complémentaire de l'invention est d'améliorer, voire d'optimiser le rendement de ces lances à oxygène, notamment en déterminant de manière optimale l'augmentation du débit de la lance.

Un but complémentaire de l'invention, dans le cas des brûleurs combinés, est de déterminer de manière optimale le changement de fonction du brûleur combiné, c'est-à-dire le passage de la fonction brûleur au soufflage à l'oxygène.

Un but complémentaire est encore d'assurer une meilleure protection des parois des fours.

Un autre but est encore d'obtenir un fonctionnement fiable et reproductible d'un four métallurgique à arc, en vue d'obtenir une fusion optimale d'une quantité donnée de ferraille, au moyen d'une énergie électrique moindre et d'une consommation en oxygène ou autres gaz réduite par rapport aux systèmes utilisés dans l'état de la technique.

### Principaux éléments caractéristiques de l'invention

Un premier objet de la présente invention, selon la revendication 1 ci-après, concerne un dispositif pour le contrôle dynamique dans un four métallurgique, de préférence un four électrique à arc d'aciérie, d'une lance à insufflation de gaz sous pression contenant de l'oxygène, ou de matières solides, ou de combustible gazeux ou liquide, le cas échéant ledit brûleur émettant en utilisation une flamme par une ouverture située à une extrémité de la lance, au-dessus d'un bain de métal fondu lui-même surmonté d'une charge de mitraille, ledit dispositif comprenant des moyens de mesure sans contact, situés à l'extérieur du four, pour estimer la distance entre une extrémité de la lance et une cible constituée par de la mitraille solide située en face de ladite extrémité, lesdits moyens de mesure sans contact comprenant une source de rayonnement émettant un faisceau incident en direction de ladite cible et un détecteur où est capté un faisceau réfléchi par la cible, de manière telle que le faisceau incident et le faisceau réfléchi passent tous deux dans la section intérieure d'une tuyère située dans l'axe de ladite lance, caractérisé en ce que ledit dispositif comprend des moyens pour réduire le diamètre des faisceaux incident et réfléchi dans la tuyère à une valeur inférieure à 30 mm.

Un deuxième objet de la présente invention, selon la revendication 26 ci-après, concerne une lance à insufflation d'oxygène pour four électrique à arc équipée du dispositif de contrôle dynamique précité.

Un troisième objet de la présente invention, selon la revendication 27 ci-après, concerne une lance à insufflation d'oxygène pour four électrique à arc, combinée à un brûleur à oxy-fuel et équipée du dispositif de contrôle dynamique précité, de manière telle que le brûleur émet en utilisation une flamme par une ouverture située à l'extrémité de la lancé.

Des modalités d'exécution préférées de l'invention sont décrites dans les revendications 2-25 ci-après.

### Brève description des figures

La figure 1 représente schématiquement en coupe verticale un four d'aciérie à brûleur combiné comportant le dispositif de l'invention.

Les figures 2.A à 2.F représentent des vues respectives en coupe longitudinale et transversale de plusieurs formes d'exécution préférées de l'invention.

La figure 3 représente graphiquement un exemple de mesures de distance au cours du temps obtenues avec le dispositif selon la présente invention, dans le cas d'un brûleur combiné.

### Description d'une forme d'exécution préférée de l'invention

L'objet principal de l'invention est de doter de moyens de contrôle dynamique les brûleurs combinés (oxy-fuel/oxygène) et les lances à oxygène montés sur les parois d'un four à arc. Comme le pilotage dynamique d'un brûleur individuel a déjà été décrit en détail dans le brevet belge précitée, on se focalisera plus particulièrement ici sur le cas de la lance à insufflation d'oxygène.

Selon une forme d'exécution préférée de l'invention, ces moyens de contrôle comprennent un capteur optique, donc sans contact, situé à l'extérieur du four à arc, pour estimer la distance entre l'extrémité de la lance et une cible constituée par de la mitraille solide située en face de ladite extrémité. Le capteur optique est situé à l'intérieur de la lance ou derrière celle-ci et se compose d'une tête de mesure comprenant une source qui émet un faisceau passant à l'intérieur de la lance en direction de la cible, c'est-à-dire la ferraille non encore fondue. Le faisceau est réfléchi par la cible en direction d'un détecteur, se trouvant dans la tête de mesure, également en passant par l'intérieur de la lance.

Le moment de mise en route de la lance à oxygène et le débit d'oxygène insufflé seront alors choisis en fonction de la charge effective en ferraille en face de chaque lance individuelle, qui est estimée précisément au moyen du capteur de distance.

Tout autre moyen qu'un moyen optiques, par exemple un système radar, c'est-à-dire un télémètre à micro-ondes ou ondes radio, permettant de déterminer des distances dans un environnement bruité par une haute température est susceptible d'être couvert également par l'objet de l'invention.

Un système pour la mesure de la distance instantanée entre l'extrémité de la lance et la ferraille solide doit permettre d'ajuster les points de fonctionnement de la lance, en vue d'éviter les désavantages mentionnés ci-dessus et ainsi d'augmenter l'efficacité de l'apport en oxygène.

De manière plus générale, sur base du signal mesuré à partir du capteur de distance, le calcul de points de fonctionnement dynamiques va également permettre un fonctionnement automatique du brûleur et/ou de la lance. Le rapport oxygène / gaz naturel, la puissance du brûleur, le basculement du mode brûleur au mode soufflage d'oxygène et la durée de fonctionnement de chaque brûleur seront calculés, le cas échéant, en fonction de la charge effective en ferraille en face de chaque brûleur ou lance.

Prenons à présent le cas d'une lance à oxygène isolée. Dans sa phase de démarrage, le débit ou la pression de soufflage d'oxygène à la lance sera limité à une valeur inférieure à la valeur nominale, voire maximale. Ces conditions seront maintenues aussi longtemps que la ferraille est présente à proximité de l'extrémité de la lance et jusqu'à ce qu'une cavité libre (vide de matière solide) soit créée au sein de la charge de ferraille, en face de la lance.

Lorsqu'une telle cavité de fusion aura été formée, la lance sera normalement pilotée dans les conditions nominales.

Le capteur de distance sera choisi pour pouvoir viser une cible portée à une très haute température locale, sans que la mesure ne soit trop perturbée par le rayonnement propre de la cible, aux longueurs d'onde utilisées. Ce capteur devra aussi s'accommoder de la présence des flammes générées dans le cas d'un brûleur combiné, qui notamment peuvent absorber le faisceau émis et reçu par le capteur.

De manière avantageuse, le principe de mesure choisi est le suivant :
- un faisceau laser pulsé vise la ferraille à travers une ouverture centrale de la lance ou du brûleur combiné;
- la lumière réfléchie est détectée par un capteur adéquat ;
- la distance (D) mentionnée ci-dessus est déduite d'un calcul de "temps de vol", basé sur l'intervalle de temps séparant l'impulsion émise de l'impulsion reçue ; la vitesse à considérer étant la vitesse de la lumière, une électronique de détection haute fréquence est requise.

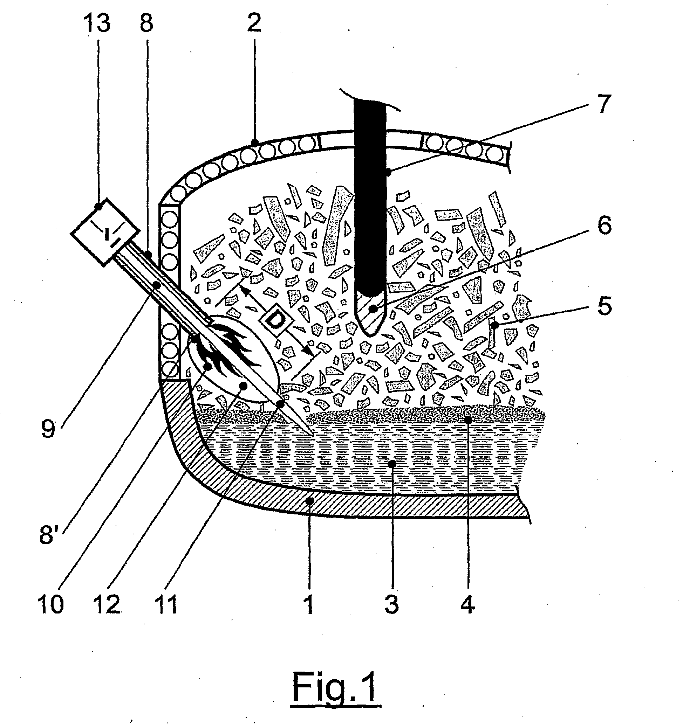

Un exemple d'installation susceptible de mettre en oeuvre le dispositif de l'invention est illustré sur la figure 1, qui montre une vue fragmentaire d'un four à arc d'aciérie, en coupe verticale, dans laquelle un brûleur combiné (brûleur + lance) comprenant le dispositif de l'invention est illustré schématiquement.

Le four à arc comprend en particulier une cuve 1 fermée par un couvercle 2, muni de moyens de refroidissement à l'eau. En fonctionnement, la cuve 1 contient un bain d'acier fondu 3 recouvert, pour mémoire, d'une couche de laitier 4. Après l'affinage, l'acier en fusion 3 est versé par un trou de coulée, bien connu de l'homme de métier (non représenté). Après la coulée, une nouvelle quantité de mitrailles 5 est chargée dans le four, couvercle 2 ouvert, au moyen d'un panier (non représenté). La charge de mitrailles 5 est fondue progressivement au moyen d'un arc électrique 6 formé entre une électrode 7 et le bain d'acier fondu 3, avec l'appoint de brûleurs tel que le brûleur combiné 8, bien connu dans l'état de la technique et développant des flammes 10 et/ou un jet d'oxygène sous pression 11 dans une cavité 12. Une tête de détection 13 de type capteur de distance est intégrée au sein du brûleur selon une forme d'exécution préférée de l'invention : celle-ci comporte notamment une diode laser qui génère un faisceau pulsé visant la ferraille 5 au travers d'une ouverture centrale 9 du brûleur ainsi qu'un photodétecteur disposé dans un angle solide lui permettant de détecter le faisceau lasser réfléchi sur la ferraille 5.

En fonctionnement normal ou efficace du brûleur, comme on l'a dit ci-dessus, une cavité libre est formée par la fusion en face de l'extrémité du brûleur, comme illustré à la figure 1. Cette cavité définit une distance D entre l'extrémité du brûleur 8' et la ferraille frontale 5 toujours à l'état solide. Cette distance D est précisément mesurée par le dispositif de l'invention.

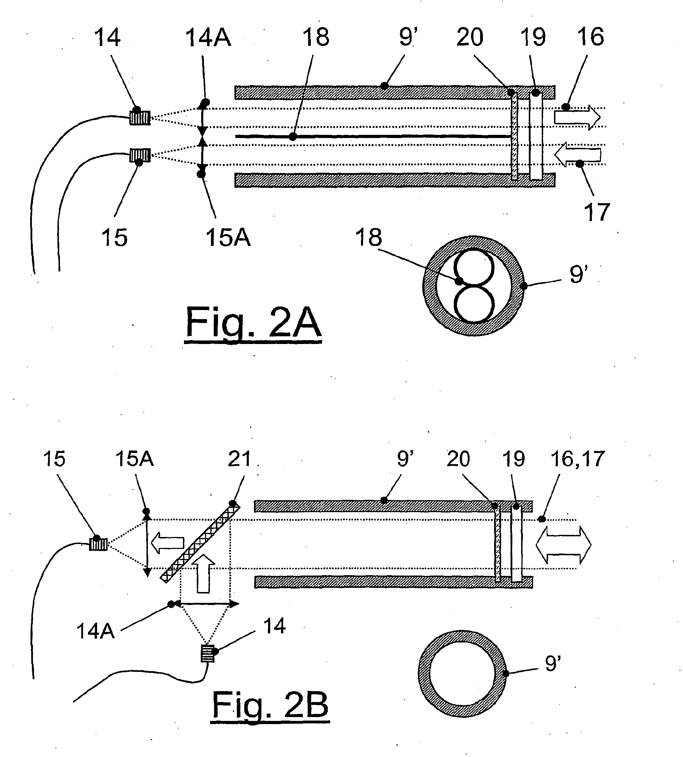

Dans ce type d'application, en particulier pour une lance à oxygène séparée où typiquement le diamètre des tuyères est inférieur à 40 mm, il n'est pas toujours possible de séparer strictement les faisceaux incident et réfléchi passant dans la tuyère de la lance comme on pouvait le faire dans le cas du dispositif correspondant installé dans un brûleur, selon le brevet précitée. Ce cas figure, pouvant être mis en oeuvre si le diamètre interne de la tuyère de la lance est suffisant, est représenté sur la figure 2A. La source de rayonnement 14, de préférence laser, munie de son optique collimatrice 14A (lentille), émet un faisceau incident (parallèle) 16 au travers du tube de visée 9' et de la tuyère de la lance 9. Le faisceau réfléchi 17 est capté par le détecteur 15, via son optique collimatrice 15A. De plus, la taille des faisceaux sera réduite par rapport au cas décrit dans le brevet belge précitée. Chaque faisceau peut ainsi être délimité par un tube séparé 18. En outre, une vitre de protection 19 contre les poussières et les projections de particules chaudes et un filtre infrarouge 20 commun aux deux faisceaux sont avantageusement prévus dans le tube de visée 9', devant l'optique.

Selon d'autres formes d'exécution préférées de l'invention, on prévoit de pallier l'inconvénient provoqué par un diamètre de tuyère très faible. Les différents dispositifs proposés traitent des faisceaux incident et réfléchi partiellement superposés.

Comme représenté sur la figure 2B, on peut prévoir que les chemins optiques correspondant aux faisceaux incident 16 et réfléchi 17 soient superposés. Dans ce cas, la source 14 émet selon un axe perpendiculaire à l'axe de la lance et le détecteur 15 reçoit le faisceau réfléchi dans ledit axe, grâce à un séparateur de faisceaux 21 (beamsplitter), par exemple un miroir semi-transparent, positionné à 45° par rapport audit axe.

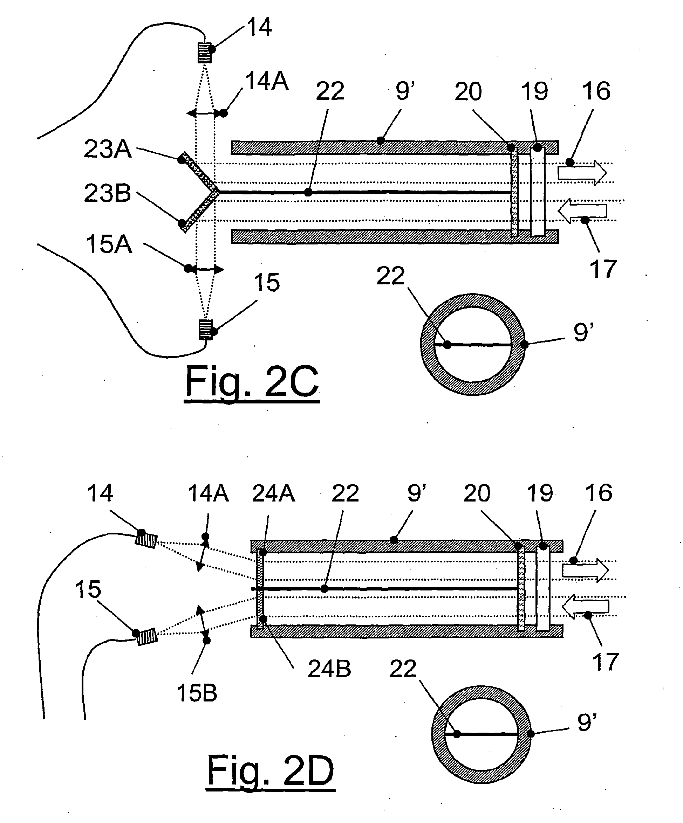

Selon une autre modalité de mise en oeuvre avantageuse de l'invention représentée sur la figure 2C, une paroi diamétrale 22 sépare physiquement les deux faisceaux dans la tuyère et deux miroirs 23A, 23B, orientés à 45° par rapport à l'axe de la lance séparent les deux faisceaux respectifs, les axes respectifs de la source 14 et du détecteur 15 étant perpendiculaires à l'axe de la lance.

Selon une autre modalité de mise en oeuvre avantageuse représentée sur la figure 2D, afin de réduire le diamètre des deux faisceaux de mesure et tenir compte de l'encombrement de l'ensemble source-capteur, on utilise deux prismes déviateurs respectifs 24A, 24B situés à l'extrémité arrière du tube de visée 9'. Ces deux prismes déviateurs permettent le renvoi ou la déviation des faisceaux incident et réfléchi sur les deux lentilles collimatrices 14A, 15A respectives du système optique. Plus généralement on peut utiliser des "verres déviateurs", c'est-à-dire des verres transparents qui dévient la lumière d'un angle connu. Tout comme pour le dispositif précédent, on peut utiliser une cloison diamétrale séparatrice 22.

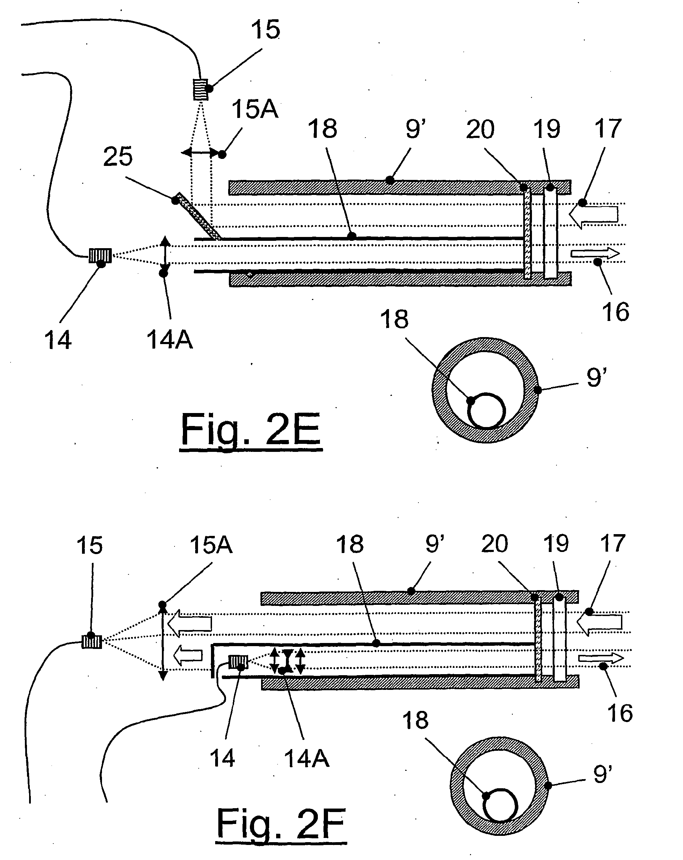

Selon encore d'autres modalités préférées de mise en oeuvre, on part de l'idée que le faisceau incident peut être de section plus faible que le faisceau réfléchi, ce qui favorise le rapport signal/bruit de réception. Ainsi dans la figure 2E, le faisceau incident 16 est confiné dans un tube 18 de section plus petite que la section interne de la tuyère. A nouveau, le faisceau réfléchi est renvoyé à 90° par rapport à l'axe de la lance, grâce à un miroir 25. Dans la figure 2F, le tube 18 est fermé à l'arrière et inclut l'émetteur 14 et son optique collimatrice 14A, qui est une lentille ou un groupe de lentilles. Outre le fait de favoriser la réception, cette configuration permet de maintenir le détecteur 15 dans l'axe de la lance.

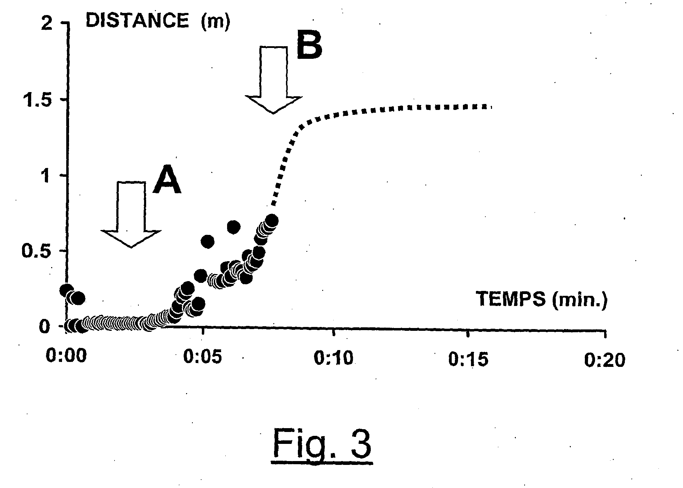

A titre d'application de la présente invention, la figure 3 illustre graphiquement la mesure de distances D, selon la définition donnée ci-dessus, en fonction du temps pour un brûleur combiné en activité, à partir du démarrage. Dans la zone A (points noirs), où seul le brûleur de préchauffage est en action, on a reporté les points correspondant à une distance mesurée en fonction du temps de fonctionnement. Au bout d'un certain temps caractérisé pour une distance mesurée déterminée, le brûleur sera arrêté ou non et on passera en mode soufflage d'oxygène par mise en action de la lance (zone B, courbe en pointillé). Dans ce cas particulier où existe un brûleur de préchauffage, on peut enclencher la lance à plein régime car la cavité est déjà bien formée dans la mitraille. On voit que la distance mesurée augmente beaucoup plus rapidement à partir de la mise en route de la lance (zone B). Cette mesure donne donc des informations permettant un meilleur contrôle de l'installation. Par exemple, si la distance mesurée reste faible pendant une longue période, cela peut être le signe d'une obstruction du brûleur ou de la lance. Le système de contrôle provoquera alors un arrêt du brûleur ou de la lance et donnera l'instruction à l'opérateur d'enclencher une procédure de nettoyage ou de maintenance par exemple.

Dans un environnement aussi agressif que celui d'un récipient de fusion métallurgique, il est toujours possible d'avoir des projections au niveau des fenêtres optiques de l'appareil de visée. Avantageusement, selon l'invention, une partie de l'oxygène insufflé par la lance pourra être consacrée au nettoyage de ces fenêtres par balayage.

L'invention présente l'avantage qu'un contrôle dynamique et automatique des brûleurs combinés et lances permet d'assurer leur fonctionnement optimal de manière fiable et reproductible en vue d'obtenir une fusion de la ferraille améliorée ou optimisée au moyen d'une consommation en énergie électrique et en gaz réduite, donc en utilisant mieux l'énergie consommée.

## Revendications

1. Dispositif pour le contrôle dynamique, dans un four métallurgique, d'une lance (9) à insufflation de gaz sous pression contenant de l'oxygène, ou de matières solides, ou de combustible gazeux ou liquide, au-dessus d'un bain de métal fondu (3) lui-même surmonté d'une charge de mitraille, ledit dispositif comprenant des moyens de mesure sans contact, situés à l'extérieur du four, pour estimer la distance (D) entre une extrémité (8') de la lance (9) et une cible (5) constituée par de la mitraille solide située en face de ladite extrémité (8'), lesdits moyens de mesure sans contact comprenant une source de rayonnement (14) émettant un faisceau incident (16) en direction de ladite cible (5) et un détecteur (15) où est capté un faisceau réfléchi (17) par la cible (5), de manière telle que le faisceau incident (16) et le faisceau réfléchi (17) passent tous deux dans la section intérieure d'une tuyère située dans l'axe de ladite lance (9), **caractérisé en ce que** ledit dispositif comprend des moyens pour réduire le diamètre des faisceaux incident (16) et réfléchi (17) dans la tuyère à une valeur inférieure à 30 mm.

2. Dispositif selon la revendication 1, **caractérisé en ce que** lesdits moyens permettent de réduire le diamètre des faisceaux incident (16) et réfléchi (17) dans la tuyère à une valeur inférieure à 20 mm.

3. Dispositif selon la revendication 1, **caractérisé en ce que** le faisceau incident (16) et le faisceau réfléchi (17) sont parallèles à l'axe de la lance et délimités par un tube (18) de diamètre inférieur au diamètre intérieur de la tuyère.

4. Dispositif selon la revendication 1, **caractérisé en ce que** le faisceau incident (16) et le faisceau réfléchi (17) sont au moins partiellement superposés à l'intérieur de la tuyère.

5. Dispositif selon la revendication 4, **caractérisé en ce qu'**il comprend un séparateur de faisceau (21) incliné à 45° par rapport à l' axe de la lance, la source de lumière (14) émettant sur ledit séparateur de faisceau selon un axe perpendiculaire audit axe et le détecteur (15) recevant le faisceau réfléchi (17) selon ledit axe.

6. Dispositif selon la revendication 1, **caractérisé en ce que** le faisceau incident (16) et le faisceau réfléchi (17) sont délimités dans la tuyère par une cloison diamétrale (22), la source (14) émettant le faisceau incident (16) selon un axe perpendiculaire à l'axe de la lance sur un premier miroir (23A) incliné à 45° par rapport audit axe et le récepteur (15) recevant le faisceau réfléchi (17) selon un axe perpendiculaire à l'axe de la lance sur un second miroir (23B) incliné à 45° par rapport audit axe.

7. Dispositif selon la revendication 1, **caractérisé en ce que** le faisceau incident (16) et le faisceau réfléchi (17) sont délimités dans la tuyère par une cloison diamétrale (22), la source (14) émettant le faisceau incident (16) et le récepteur (15) recevant le faisceau réfléchi (17) selon des axes respectifs obliques par rapport à l'axe de la lance grâce à deux prismes déviateurs (24A, 24B).

8. Dispositif selon la revendication 1, **caractérisé en ce que** la source (14) émet le faisceau incident (16) dans l'axe de la lance, ce dernier étant confiné dans un tube (18) de section inférieure à la section interne de la tuyère, le faisceau réfléchi (17) passant dans la tuyère à l'extérieur dudit tube (18).

9. Dispositif selon la revendication 8, **caractérisé en ce que** le faisceau réfléchi (17) est dévié par un miroir (25) sur le détecteur (15), en dehors de l'axe de la lance.

10. Dispositif selon la revendication 8, **caractérisé en ce que** la source (14) est encapsulée dans le tube (18) qui est fermé à l'arrière, le faisceau réfléchi (17) étant reçu par le détecteur (15) dans l'axe de la lance.

11. Dispositif selon la revendication 1, **caractérisé en ce que** les moyens de mesure de distance (D) entre l'extrémité (8') de la lance (9) et la mitraille solide (5) comprennent une tête de détection (13) de type capteur de distance optique, situé à l'intérieur ou à l'arrière de la lance (9), muni d'un laser (14) de préférence pulsé émettant le faisceau incident (16) visant la mitraille (5) à travers la tuyère située dans l'axe de la lance (9) et un photodétecteur (15) apte à recevoir à travers cette même tuyère le faisceau laser réfléchi (17) par la mitraille (5).

12. Dispositif selon la revendication 11, **caractérisé en ce que** la tête de détection (13) est configurée pour effectuer la mesure de distance sur une cible portée à haute température, de préférence à une température pouvant attendre 1500°C et/ou pour effectuer ladite mesure dans un environnement ou sur un trajet optique présentant des flammes.

13. Dispositif selon l'une quelconque des revendications 11 à 12, **caractérisé en ce que** la tête de détection (13) est équipée de moyens de refroidissement.

14. Dispositif selon l'une quelconque des revendications 11 à 13, **caractérisé en ce que** le laser (14) est une diode laser semi-conductrice émettant dans l'infrarouge, équipée d'au moins une lentille collimatrice et d'un filtre, de préférence un filtre interférentiel, pour éliminer bu atténuer le bruit de fond lié au rayonnement propre du four.

15. Dispositif selon l'une quelconque des revendications 11 à 14, **caractérisé en ce que** le photodétecteur (15) comprend au moins une lentille de réception avec un filtre interférentiel et au moins une photodiode, couplée à un système électronique de détection haute fréquence.

16. Dispositif selon la revendication 15, **caractérisé en ce que** la photodiode est couplée par fibre optique au système électronique de détection haute fréquence.

17. Dispositif selon l'une quelconque des revendications 11 à 16, **caractérisé en ce que** la tête de détection (13) comprend une fenêtre de protection (19).

18. Dispositif selon la revendication 17, **caractérisé en ce que** la fenêtre de protection (19) est équipée de moyens de protection à balayage par de l'oxygène sous pression prélevé au niveau de ladite lance (9) et d'un filtre commun à l'émetteur (14) et au détecteur (15) qui élimine ou atténue le rayonnement infrarouge parasite.

19. Dispositif selon l'une quelconque des revendication 11 à 18, **caractérisé en ce que** la tête de détection (13) est configurée pour pouvoir mesurer des distances allant jusqu'à 5 mètres.

20. Dispositif selon l'une quelconque des revendications 1 à 19, **caractérisé en ce que** la lance (9) à insufflation dé gaz sous pression contenant de l'oxygène, ou de matières solides ou de combustible gazeux ou liquide est combinée à un brûleur (8) à combustible gazeux ou liquide, ledit brûleur (8) émettant en utilisation une flamme (10) par une ouverture située à ladite extrémité (8') de la lance (9).

21. Dispositif selon l'une quelconque des revendications 11 à 19, **caractérisé en ce qu'**il comprend en outre des moyens de régulation pour ajuster en temps réel un débit ou une pression en oxygène de la lance (9), le moment de mise en route de l'insufflation de l'oxygène par la lance (9).

22. Dispositif selon la revendication 20, **caractérisé en ce qu'**il comprend en outre des moyens de régulation pour ajuster en temps réel un rapport gaz comburant / combustible au niveau de l'alimentation du brûleur (8) et/ou la puissance du brûleur et/ou la durée de fonctionnement du brûleur, en fonction de la distance (D) mesurée par la tête de détection (13) et l'électronique haute fréquence.

23. Dispositif selon la revendication 21 ou 22, **caractérisé en ce que** lesdits moyens de régulation sont des moyens de régulation en boucle fermée.

24. Dispositif selon la revendication 20, **caractérisé en ce que** la lance (9) et le brûleur (8) sont combinés et concentriques.

25. Dispositif selon la revendication 20, **caractérisé en ce que** la lance (9) et le brûleur (8) sont séparés physiquement dans le four.

26. Lance à insufflation d'oxygène (9) pour four électrique à arc équipée d'un dispositif de contrôle dynamique selon l'une quelconque des revendications 1 à 19.

27. Lance à insufflation d'oxygène (9) combinée à un brûleur à oxy-fuel (8) pour four électrique à arc équipée d'un dispositif de contrôle dynamique selon la revendication 20.

## Claims

1. Device for the dynamic control in a metallurgical furnace of a nozzle (9) for injecting compressed gas with oxygen, or solid substances, or gas or liquid fuel, above a bath of molten metal (3), itself surmounted by a charge of scrap metal, said device comprising a contactless measurement means located outside the furnace for estimating the distance (D) between one end (8') of the nozzle (9) and a target (5) made of solid scrap metal positioned opposite said end (8'), said contactless measurement means comprising a radiation source (14) emitting an incident beam (16) aimed in the direction of said target (5) and a sensor (15) where a reflected beam (17) is detected by the target (5), in such a way that the incident beam (16) and the reflected beam (17) both pass through the inner section of a pipe positioned on the axis of said nozzle (9), **characterised in that** said device comprises a means for reducing the diameter of the incident (16) and reflected (17) beams in the pipe to a size lower than 30 mm.

2. Device according to Claim 1, **characterised in that** said means allows to reduce the diameter of the incident (16) and reflected (17) beams in the pipe to a size lower than 20 mm.

3. Device according to Claim 1, **characterised in that** the incident beam (16) and the reflected beam (17) are parallel to the axis of the nozzle and delimited by a tube (18) with a diameter that is lower than the inner diameter of the pipe.

4. Device according to Claim 1, **characterised in that** the incident beam (16) and the reflected beam (17) are at least partially superimposed inside the pipe.

5. Device according to Claim 4, **characterised in that** it comprises a beam splitter (21) inclined at 45° relative to the axis of the nozzle, the light source (14) emitting on said beam splitter along an axis that is perpendicular to said axis and the sensor (15) receiving the reflected beam (17) along said axis.

6. Device according to Claim 1, **characterised in that** the incident beam (16) and the reflected beam (17) are delimited in the pipe by a diametral partition (22), the source (14) emitting the incident beam (16) along an axis that is perpendicular to the axis of the nozzle on a first mirror (23A) inclined at 45° relative to said axis and the receiver (15) receiving the reflected beam (17) along an axis that is perpendicular to the axis of the nozzle on a second mirror (23B) inclined at 45° relative to said axis.

7. Device according to Claim 1, **characterised in that** the incident beam (16) and the reflected beam (17) are delimited in the pipe by a diametral partition (22), the source (14) emitting the incident beam (16) and the receiver (15) receiving the reflected beam (17) along their respective axes which are oblique relative to the axis of the nozzle thanks to two deflecting prisms (24A,24B).

8. Device according to Claim 1, **characterised in that** the source (14) emits the incident beam (16) on the axis of the nozzle, the latter being confined in a tube (18) with a cross-section that is smaller than the inner cross-section of the pipe, the reflected beam (17) passing through the pipe outside said tube (18).

9. Device according to Claim 8, **characterised in that** the reflected beam (17) is deflected by a mirror (25) on the sensor (15), outside the axis of the nozzle.

10. Device according to Claim 8, **characterised in that** the source (14) is encapsulated in the tube (18), which is closed at the back, the reflected beam (17) being received by the sensor (15) in the axis of the nozzle.

11. Device according to Claim 1, **characterised in that** the means for measuring the distance (D) between the end (8') of the nozzle (9) and the solid scrap metal (5) comprises a sensor head (13) of an optical remote sensor type, positioned inside or behind the nozzle (9), equipped with a laser (14), that is preferably pulsed, emitting the incident beam (16) aimed at the scrap metal (5) through the pipe positioned in the axis of the nozzle (9) and a light sensor (15) which is capable of receiving the laser beam (17) reflected by the scrap metal (5) through this same pipe.

12. Device according to Claim 11, **characterised in that** the sensor head (13) is configured so as to measure the distance for a target brought to a high temperature, preferably a temperature that may reach 1,500°C, and/or so as to take said measurement in an environment or over an optical path with flames.

13. Device according to any one of Claim 11 to 12, **characterised in that** the sensor head (13) is equipped with a cooling means.

14. Device according to any one of Claims 11 to 13, **characterised in that** the laser (14) is a semiconducting laser diode emitting in the infrared, equipped with at least one collimating lens and a filter, preferably an interference filter, in order to eliminate or attenuate the background noise associated with the radiation from the furnace itself.

15. Device according to any one of Claims 11 to 14, **characterised in that** the light sensor (15) comprises at least one receiving lens with an interference filter and at least one photodiode, linked to an electronic high-frequency detection system.

16. Device according to Claim 15, **characterised in that** the photodiode is linked by fibre optics to the electronic high-frequency detection system.

17. Device according to any one of Claims 11 to 16, **characterised in that** the sensor head (13) comprises a protection window (19).

18. Device according to Claim 17, **characterised in that** the protection window (19) is equipped with a protection means by sweeping with compressed oxygen taken from said nozzle (9) and with a filter shared by the emitter (14) and the sensor (15) which eliminates or attenuates the infrared radiation interference.

19. Device according to any one of Claims 11 to 18, **characterised in that** the sensor head (13) is configured so as to be able to measure distances of up to 5 metres.

20. Device according to any one of Claims 1 to 19, **characterised in that** the nozzle (9) for injecting compressed gas with oxygen, or solid substances, or gas or liquid fuel is combined with a gas or liquid fuel burner (8), said burner (8) in operation emitting a flame (10) through an aperture located at said end (8') of the nozzle (9).

21. Device according to any one of Claims 11 to 19, **characterised in that** it also comprises a regulation means for adjusting in real time the oxygen flow rate or pressure of the nozzle (9), from the moment when the oxygen is injected by the nozzle (9).

22. Device according to Claim 20, **characterised in that** it also comprises a regulation means for adjusting in real time the oxidising gas/fuel ratio at the level of the burner (8) intake and/or the power of the burner and/or the period that the burner operates as a function of the distance (D) measured by the sensor head (13) and the high-frequency electronics.

23. Device according to Claim 21 or 22, **characterised in that** said regulation means is a closed-loop regulation means.

24. Device according to Claim 20, **characterised in that** the nozzle (9) and the burner (8) are combined and concentric.

25. Device according to Claim 20, **characterised in that** the nozzle (9) and the burner (8) are physically separated in the furnace.

26. Nozzle for injecting oxygen (9) for an electric arc furnace equipped with a dynamic control device according to any one of Claims 1 to 19.

27. Nozzle for injecting oxygen (9) combined with an oxy-fuel burner (8) for an electric arc furnace equipped with a dynamic control device according to Claim 20.

## Patentansprüche

1. Gerät für die dynamische Steuerung in einem metallurgischen Ofen, einer Lanze (9) zum Einblasen von unter Druck stehendem Gas, das Sauerstoff oder Feststoffe oder gasförmigen oder flüssigen Brennstoff enthält, oberhalb eines Bades mit geschmolzenem Metall (3); über dem besagten Metallschmelzbad ist eine Ladung Metallschrott angebracht, wobei das besagte Gerät Hilfsmittel zur berührungslosen Messung enthält, die sich an der Ofenaußenseite befinden, um den Abstand (D) zwischen dem einem Ende (8') der Lanze (9) und einem Ziel (5), das durch den festen Metallschrott, der sich gegenüber dem besagten Ende (8') befindet, einzuschätzen, wobei die besagten Hilfsmittel zur berührungslosen Messung eine Strahlungsquelle (14), die einen ursprünglichen Strahl (16) in Richtung des besagten Ziels (5) sowie einen Sensor (15), in dem ein durch das Ziel (5) reflektierter Strahl (17) erfasst wird, abgibt, umfassen, so dass der ursprüngliche Strahl (16) und der reflektierte Strahl (17) beide durch den Innenquerschnitt einer Düse, die sich in der Achse mit der besagten Lanze (9) befindet, geführt werden, wobei das besagte Gerät sich **dadurch** auszeichnet, dass es Hilfsmittel zur Reduzierung des Durchmessers des ursprünglichen (16) und reflektierten (17) Strahles in der Düse auf einen Wert von weniger als 30 mm einschließt.

2. Gerät entsprechend dem Anspruch 1, **dadurch gekennzeichnet, dass** die besagten Hilfsmittel es gestatten, den Durchmesser des ursprünglichen (16) und des reflektierten Strahls (17) in der Düse auf einen Wert von weniger als 20 mm zu reduzieren.

3. Gerät entsprechend dem Anspruch 1, **dadurch gekennzeichnet, dass** der ursprüngliche Strahl (16) und der reflektierte Strahl (17) mit der Achse der Lanze parallel verlaufen und durch ein Rohr (18) mit einem Durchmesser, der geringer als der Innendurchmesser der Düse ist, begrenzt werden.

4. Gerät entsprechend dem Anspruch 1, **dadurch gekennzeichnet, dass** der ursprüngliche Strahl (16) und der reflektierte Strahl (17) sich zumindest teilweise im Inneren der Düse überlagern.

5. Gerät entsprechend dem Anspruch 4, **dadurch gekennzeichnet, dass** es einen Strahlenteiler (21) beinhaltet, der im Vergleich zur Achse der Lanze um 45° geneigt ist; hierbei gibt die Lichtquelle (14) auf den besagten Strahlenteiler entsprechend einer Achse im rechten Winkel einen Strahl ab, während der Sensor (15), den reflektierten Strahl (17) entsprechend der besagten Achse empfängt.

6. Gerät entsprechend dem Anspruch 1, **dadurch gekennzeichnet, dass** der ursprünglich abgegebene Strahl (16) und der reflektierte Strahl (17) in der Düse durch eine diametrale Trennwand (22) begrenzt werden; hierbei gibt die Quelle (14) den ursprünglichen Strahl (16) entsprechend einer rechtwinklig zur Achse der Lanze stehenden Achse auf einen ersten Spiegel (23A) ab, der im Vergleich zur besagten Achse um 45° geneigt ist und der Empfänger (15) empfängt den reflektierten Strahl (17) entsprechend einer senkrecht zur Lanzenachse stehenden Achse über einen zweiten Spiegel (23B), der im Vergleich zur besagten Achse um 45° geneigt ist.

7. Gerät entsprechend dem Anspruch 1, **dadurch gekennzeichnet, dass** der ursprüngliche Strahl (16) und der reflektierte Strahl (17) in der Düse durch eine diametrale Abtrennung (22) begrenzt werden; die Quelle (14) gibt den ursprünglichen Strahl (16) ab und der Empfänger (15) empfängt den reflektierten Strahl (17) entsprechend der, im Vergleich zur Achse der Lanze, dank zweier ablenkenden Prismen (24A, 24B), jeweils schräg angeordneten Achsen.

8. Gerät entsprechend dem Anspruch 1, **dadurch gekennzeichnet, dass** die Quelle (14) den ursprünglichen Strahl (16) in der Achse der Lanze abgibt; letztere ist hierbei in einem Rohr (18) mit einem geringeren Querschnitt als der Düse eingeschlossen, während der reflektierte Strahl (17) an der Außenseite des besagten Rohres (18) durch die Düse geführt wird.

9. Gerät entsprechend dem Anspruch 8, **dadurch gekennzeichnet, dass** der reflektierte Strahl (17) durch einen Spiegel (25) auf den Sensor (15) außerhalb der Achse der Lanze abgelenkt wird.

10. Gerät entsprechend dem Anspruch 8, **dadurch gekennzeichnet, dass** die Quelle (14) im Rohr (18), das an der Rückseite verschlossen ist, eingekapselt ist; hierbei wird der reflektierte Strahl (17) vom Sensor (15) in der Achse der Lanze empfangen.

11. Gerät entsprechend dem Anspruch 1, **dadurch gekennzeichnet, dass** die Hilfsmittel zur Abstandsmessung (D) zwischen dem einem Ende (8') der Lanze (9) und dem festen Metallschrott (5) einen Messfühler (13) vom Typ optischer Entfernungssensor enthalten, der sich im Inneren oder hinter der Lanze (9) befindet und der mit einem vorzugsweise gepulsten Laser (14) ausgestattet ist, der den ursprünglichen Strahl(16) abgibt, der auf den Metallschrott (5) quer durch die Düse , die sich in der Achse der Lanze (9) befindet, abzielt; ferner beinhalten die Hilfsmittel zur Abstandsmessung einen Photodetektor (15), der in der Lage ist, quer durch diese gleiche Düse den durch den Metallschrott (5) reflektierten Laserstrahl(17) zu empfangen.

12. Gerät entsprechend dem Anspruch 11, **dadurch gekennzeichnet, dass** der Messfühler (13) so konfiguriert ist, dass er die Entfernungsmessung an einem auf eine hohe Temperatur, vorzugsweise auf eine Temperatur von bis zu 1500°C, gebrachten Ziel, durchführen kann und/oder dass er die besagte Messung in einer Umgebung oder auf einer optischen Strecke, auf der Flammen vorhanden sind, durchführen kann.

13. Gerät entsprechend irgendeinem der Ansprüche 11 bis 12, **dadurch gekennzeichnet, dass** der Messfühler (13) mit Kühlvorrichtungen ausgestattet ist.

14. Gerät entsprechend irgendeinem der Ansprüche 11 bis 13, **dadurch gekennzeichnet, dass** es sich bei dem Laser (14) um eine Halbleiter-Laserdiode handelt, die Strahlen im Infrarotbereich aussendet und mindestens mit einer Kollimatorlinse und einem Filter, vorzugsweise mit einem Interferenzfilter, ausgestattet ist, um den Störuntergrund der Eigenstrahlung des Ofens zu beseitigen oder zu dämpfen.

15. Gerät entsprechend irgendeinem der Ansprüche 11 bis 14, **dadurch gekennzeichnet, dass** der Photodetektor (15) mindestens eine Empfangslinse mit einem Interferenzfilter und mindestens eine Photodiode, die mit einem elektronischen Hochfrequenz-Erkennungssystem gekoppelt ist, enthält.

16. Gerät entsprechend dem Anspruch 15, **dadurch gekennzeichnet, dass** die Photodiode über eine Faseroptik mit dem elektronischen Hochfrequenz-Erkennungssystem gekoppelt ist.

17. Gerät entsprechend irgendeinem der Ansprüche 11 bis 16, **dadurch gekennzeichnet, dass** der Messfühler (13) ein Schutzfenster (19) beinhaltet.

18. Gerät entsprechend dem Anspruch 17, **dadurch gekennzeichnet, dass** das Schutzfenster (19) mit einer Schutzvorrichtung durch Überstreichen mit unter Druck stehendem Sauerstoff, der auf der Höhe der besagten Lanze (9) abgenommen wurde, sowie mit einem für den Sender (14) und den Detektor (15) gemeinsamen Filter, der die Infrarot-Störstrahlung beseitigt oder dämpft, ausgestattet ist.

19. Gerät entsprechend irgendeinem der Ansprüche 11 bis 18, **dadurch gekennzeichnet, dass** der Messfühler (13) so konfiguriert wurde, dass er Abstände bis zu 5 m messen kann.

20. Gerät entsprechend irgendeinem der Ansprüche 1 bis 19, **dadurch gekennzeichnet, dass** die Lanze (9) für das Einblasen von Gas unter Druck, die Sauerstoff oder Feststoffe oder gasförmige oder flüssige Brennstoffe enthält, mit einem Brenner (8) mit gasförmigem oder flüssigem Brennstoff kombiniert ist; der besagte Brenner(8) gibt bei Nutzung eine Flamme (10) durch eine Öffnung, die sich am besagten Ende (8') der Lanze befindet (9), ab.

21. Gerät entsprechend irgendeinem der Ansprüche 11 bis 19, **dadurch gekennzeichnet, dass** es zudem Hilfsmittel für die Regelung zur Einstellung in Echtzeit der Durchflussmenge oder des Sauerstoffdrucks der Lanze (9), des Einsatzmoments der Sauerstoffeinblasung durch die Lanze (9) beinhaltet.

22. Gerät entsprechend dem Anspruch 20, **dadurch gekennzeichnet, dass** es zudem Regeleinrichtungen zur Einstellung in Echtzeit des Verhältnisses des oxidierenden Gases/Brennmaterials auf der Ebene der Brennerversorgung (8) und/oder der Brennerleistung und/oder der Funktionsdauer des Brenners, in Abhängigkeit des durch den Messfühler (13) und die Hochfrequenzelektronik gemessenen Abstands (D) beinhaltet.

23. Gerät entsprechend dem Anspruch 21 oder 22, **dadurch gekennzeichnet, dass** es sich bei den besagten Regeleinrichtungen um Regeleinrichtungen in einem geschlossenen Kreislauf handelt.

24. Gerät entsprechend dem Anspruch 20, **dadurch gekennzeichnet, dass** die Lanze (9) und der Brenner (8) kombiniert und konzentrisch sind.

25. Gerät entsprechend dem Anspruch 20, **dadurch gekennzeichnet, dass** die Lanze (9) und der Brenner (8) im Ofen physikalisch getrennt sind.

26. Lanze für das Einblasen von Sauerstoff (9) für einen elektrischen Lichtbogenofen, der mit einer dynamischen Steuerungsvorrichtung entsprechend irdendeinem der Ansprüche 1 bis 19 ausgestattet ist.

27. Lanze für das Einblasen von Sauerstoff (9), kombiniert mit einem Sauerstoff-Brennstoff-Brenner (8) für einen elektrischen Lichtbogenofen, der mit einer Vorrichtung zur dynamischen Steuerung entsprechend dem Anspruch 20 ausgestattet ist.
